## Europäisches Patentamt

## European Patent Office

## Office européen des brevets

(19)

(11) Veröffentlichungsnummer: **0 071 652**
**A1**

(12)

# EUROPÄISCHE PATENTANMELDUNG

(21) Anmeldenummer: 81106049.0

(22) Anmeldetag: 01.08.81

(51) Int. Cl.³: **G 01 G 3/08**, G 01 L 1/04

(43) Veröffentlichungstag der Anmeldung: **16.02.83**
**Patentblatt 83/7**

(84) Benannte Vertragsstaaten: **AT BE CH DE FR GB IT LI NL SE**

(71) Anmelder: **WIRTH, GALLO & CO, Sonnenbergstrasse 55, CH-8032 Zürich (CH)**

(72) Erfinder: **Gallo, Mario, Krönieinstrasse 1, CH-8044 Zürich (CH)**
Erfinder: **Saner, Kaspar, Buenstrasse 58, CH-8600 Dübendorf (CH)**
Erfinder: **Wirth, Johannes, Sonnenbergstrasse 55, CH-8032 Zürich (CH)**

(54) **Massen- und Kraftmessgerät.**

(57) Massen- und Kraftmeßgerät, das sich insbesondere zum Messen von sehr großen Gegenständen z.B. Fahrzeugen eignet. Dieses Massen- und Kraftmeßgerät ist mit einem Gestell (3), einem Lastträger (6), einem Meß-System (11), Federn zur Aufnahme des Hauptanteiles der Last (4) und einem elastischen Übertragungsorgan (8) zur Übertragung des lastproportionalen Restanteiles der Last auf das Meß-System versehen. Damit trotz den lastbedingten großen Abmessungen des Lastträgers die Gesamtbauhöhe klein bleibt und um die Genauigkeit der Messungen allfälligen unberechenbaren Verformungen des Gestelles gegenüber unempfindlich zu machen, stützt sich der Lastträger unmittelbar auf zwei Stützen (5), die je mittels zweier, eine Parallelführung bildender Blattfedern (4) am Gestell (1, 3) angebracht sind.

Wirth, Gallo & Co.                           Zürich

---

### Massen- und Kraftmessgerät

---

Die vorliegende Erfindung bezieht sich auf ein Massen- und Kraftmessgerät, das sich insb. zum Messen von sehr grossen Gegenständen z.B. Fahrzeugen eignet. Dieses Massen- und Kraftmessgerät ist mit einem Gestell, einem Lastträger, einem Mess-System, Federn zur Aufnahme des Hauptanteiles der Last und einem elastischen Uebertragungsorgan zur Uebertragung des lastproportionalen Restanteiles der Last auf das Mess-System versehen.

Es sind Massen- und Kraftmessgeräte z.B. aus dem Europäischen Patent ... ... (Europ. Anmeldung 78101647.2) bekannt, bei welchen zwischen dem parallel geführten Lastträger und dem Gestell eine Lastfeder zur Aufnahme des Hauptanteiles der Last geschaltet ist, während zwischen diesem Lastträger und dem Mess-System des Gerätes eine wesentlich schwächere Messfeder vorgesehen ist, die auf das Mess-System eine sehr kleine, lastproportionale Messkraft überträgt.

Fall 139
Belastungsstab

Im Europäischen Patent ... ... (Europ. Anmeldung 79100900.4) ist ein weiteres Gerät beschrieben, bei welchem Parallelführung des Lastträgers und Lastfedern zu einem einzigen Organ des Gerätes kombiniert sind. In diesen beiden Messgeräten erfolgt die Parallelführung des Lastträgers mittels Lenkern. Bei jeder Parallelführung mit solchen Lenkern nimmt die höchstmögliche Längsbeanspruchung der Lenker mit den Abmessungen des Lastträgers zu und mit dem vertikalen Abstand zwischen den Lenkern ab. Um Waagen von grossen Abmessungen zu verwirklichen, muss man also zwangsläufig sehr massig gebaute Lenker oder schlankere Lenker verwenden, die aber in einem grösseren vertikalen Abstand voneinander liegen müssen. Beide Lösungen bedingen eine verhältnismässig grosse Bauhöhe. Sollen besonders grosse Gegenstände wie Fahrzeuge oder Lokomotiven gewogen werden und muss das Messgerät in einer flachen Grube angeordnet sein, so lassen sich Geräte der bekannten Gattungen schon aus diesen Gründen nicht verwenden. Hinzu kommt eine weitere Schwierigkeit. Bei diesen bekannten Messgeräten ist meistens die absolute Grösse der Höchstlast derart begrenzt, dass das Gestell als absolut starr vorausgesetzt werden kann, was bei solchen Geräten zum fehlerfreien Messen erforderlich ist. Damit eine solche Voraussetzung beim Wägen von sehr grossen Lasten ebenfalls angenommen werden könnte, müsste das Gestell derart massiv gebaut werden, dass es weder die Bedingung einer kleineren Höhe noch diejenige eines vernünftigen wirtschaftlichen Aufwandes erfüllen würde.

Die der Erfindung zu Grunde liegende Aufgabe besteht darin, ein Massen- und Kraftmessgerät zu schaffen, bei welchem trotz der lastbedingten grossen Abmessungen des Lastträgers die Gesamtbauhöhe klein bleibt und allfällige unberechenbare Verformungen des Gestelles ohne Einfluss auf die Genauigkeit der Messung bleiben.

Erfindungsgemäss wird dies dadurch erreicht, dass sich der Lastträger unmittelbar auf zwei Stützen stützt, die je mittels zweier, eine Parallelführung bildender Blattfedern am Gestell angebracht sind.

In der beiliegenden Zeichnung sind Ausführungsbeispiele des Erfindungsgegenstandes schematisch dargestellt.

Es zeigen:

Fig. 1            einen Aufriss eines ersten Ausführungsbeispieles,

Fig. 2            einen Grundriss bei abgenommenem Lastträger,

Fig. 3, 4         die Verformung des Uebertragungsorganes bei verschiedenen Belastungen,

Fig. 5-8          eine Ausführungsvariante des Uebertragungsorganes,

Fig. 9-10         ein zweites Ausführungsbeispiel,

Fig. 11-12        ein drittes Ausführungsbeispiel,

Fig. 13-14        ein viertes Ausführungsbeispiel,

Fig. 15-16        ein fünftes Ausführungsbeispiel,

Fig. 17-19        Anwendungen des Ausführungsbeispiels nach Fig. 13-14.

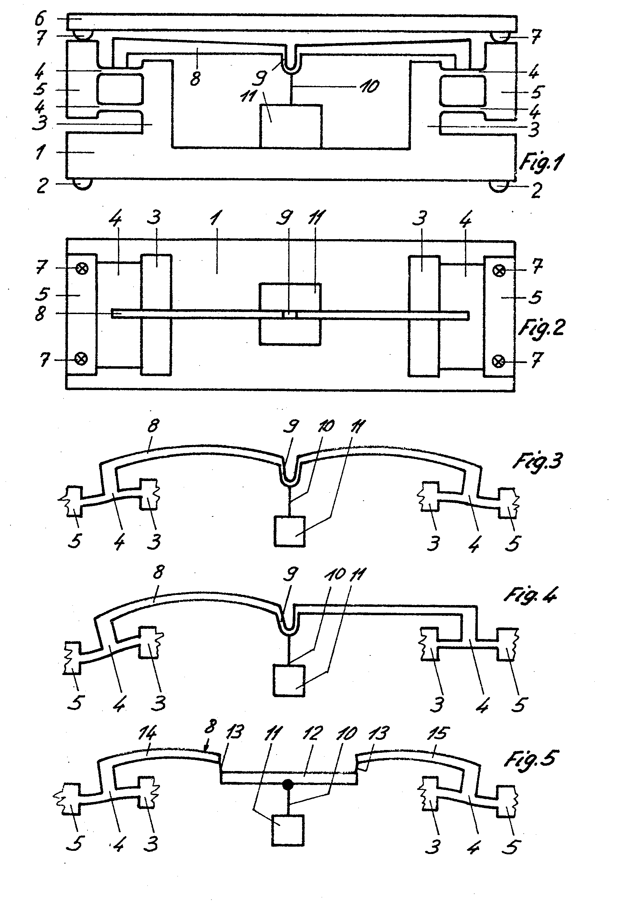

Ein erstes Ausführungsbeispiel ist in Fig. 1-4 schematisch dargestellt. Die dargestellte Waage weist ein längliches Gestell 1 auf,
das sich auf der linken Seite auf einen und auf der rechten Seite
auf zwei Füsse 2 stützt. Es ist ferner mit zwei senkrechten Auslegern 3 versehen. In jedem dieser Ausleger 3 ist ein Paar von
übereinander liegenden Blattfedern 4 eingespannt. An deren anderen
Enden tragen diese Blattfedern 4 eine Stütze 5, in welcher ihre
anderen Enden ebenfalls eingespannt sind. Ueber diesen Stützen 5
liegt ein Lastträger 6. Er ist auf seiner Unterseite mit vier Belastungspunkten 7 versehen, über welche er sich unmittelbar auf die
Stützen 5 stützt. Ein elastisches, aus Biegefedern bestehendes
Uebertragungsorgan 8 ist beiderends in den oberen Blattfedern 4
eingespannt. Es weist in seiner Mitte einen U-förmigen, elastischen
Teil 9 auf, der mittels eines Zugdrahtes 10 mit dem Krafteingang
einer am Gestell 1 befestigten Kraftmesszelle 11 verbunden ist.
Dieser Teil 9 ist wesentlich biegsamer als die oben genannten Biegefedern.

Wird der Lastträger 6 belastet, so wird der Hauptanteil der Last von
den Blattfedern 4 aufgenommen. Der lastproportionale Restanteil der
Last wird durch das Uebertragungsorgan 8 aufgenommen und mittels des
Zugdrahtes 10 auf die Kraftmesszelle 11 übertragen.

Bei zentraler Belastung des Lastträgers 6 (Fig. 3) sind die beiden
das Uebertragungsorgan 8 bildenden Biegefedern aus Symmetriegründen gleichmässig belastet und ihre mit den Blattfedern 4 verbundenen Enden werden um den gleichen Betrag nach unten verschoben. Die Verdrehungen dieser Enden sind gleich, aber entgegengesetzt. Da der Teil 9 über den Draht 10 und die Kraftmesszelle 11 mit dem Gestell 1 lageschlüssig verbunden ist, entsteht eine nach oben gerichtete, auf den Zugdraht 10 wirkende Kraft, die sog. Messkraft, die als Mass für die Belastung von der Kraftmesszelle 11 verwertet wird. Diese Messkraft entspricht nur einem Bruchteil, z.B. 1% der Belastung.

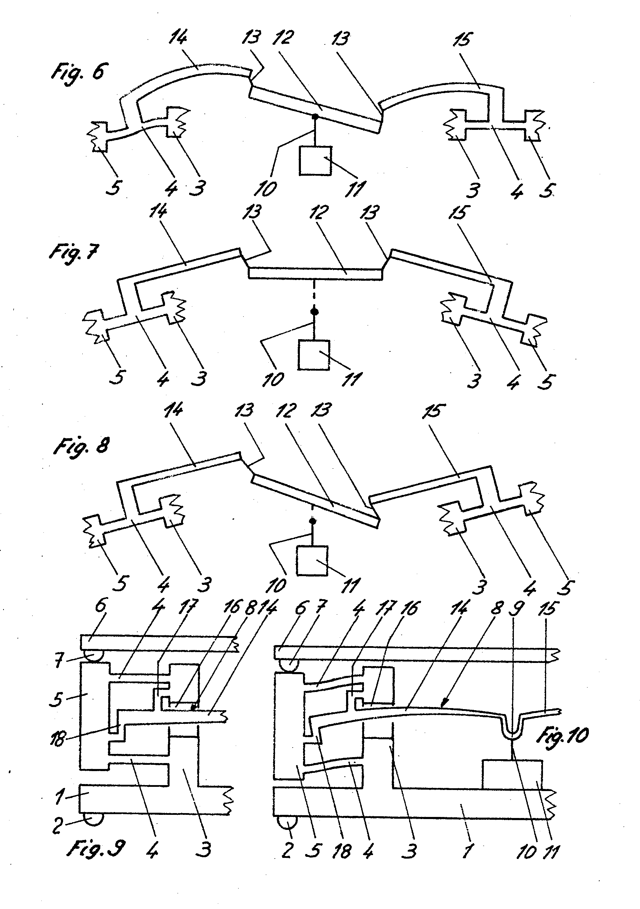

Wirkt die Belastung asymmetrisch, z.B. auf der linken Seite des Lastträgers, so verbiegt sich nur die linke Biegefeder des Uebertragungsorganes 6 (Fig. 4). Die im Zugdraht 10 entstehende Messkraft dient als Mass für die Belastung.

In Fig. 5-8 ist eine Ausführungsvariante des Uebertragungsorganes 8 dargestellt. An Stelle des Teiles 9 weist es einen starren Stab 12 auf, der mittels elastischer Gelenke 13 mit zwei Biegefedern 14 und 15 verbunden ist. Fig. 5 entspricht einer zentralen Belastung des Lastträgers 6. Der starre Stab 12 ist in seiner Mitte an dem Zugdraht 10 befestigt. Wie im Falle der Fig. 3 entsteht aus Symmetriegründen eine gleiche Verbiegung der beiden Biegefedern 14, 15. Fig. 6 entspricht einer nicht zentral wirkenden Belastung wie in Fig. 4. In diesem Fall asymmetrisch wirkender Belastung dreht sich der starre Stab 12 bis Kräftegleichgewicht entsteht, d.h. bis die zwei Biegefedern 14, 15 die gleiche Verbiegung aufweisen und somit die gleiche Kraft auf den Stab 12 ausüben. Diese Kraft ist gleich der Hälfte der Kraft, die die linke Biegefeder 14 ausüben würde, falls der Stab 12 horizontal und die rechte Biegefeder 15 unbelastet bleiben würde.

In allen in Fig. 3-6 dargestellten Fällen wurde implizite angenommen, dass das Gestell 1 bezüglich der Belastung starr genug ausgeführt ist, damit es keine, die Ermittlung der Belastung verfälschenden Verformungen erfährt. Ist dies jedoch nicht der Fall und erfahren die Ausleger 3 unter Wirkung der Belastung eine gewisse Versetzung, so entsteht eine zusätzliche Verformung des Uebertragungsorganes 8, die sich den beschriebenen Verformungen überlagert.

Dies ist der Fall wenn die Belastungspunkte 7 nicht senkrecht über den Füssen 2 liegen, so dass das Gestell 1 Momenten ausgesetzt wird. In Fig. 7 und 8 sind diese zusätzlichen Verformungen dargestellt. Fig. 7 stellt die Verformung dar, die sich der Verformung gemäss Fig. 5 überlagert, wenn zwei gleiche und entgegengesetzte Momente auf das Gestell wirken. Dadurch wird eine Verschiebung der in den Blattfedern 4 eingespannten Enden der Biegefedern 14, 15, eine Verdrehung dieser Biegefedern 14, 15 und eine bezüglich der Kraftmesszelle 11 virtuelle Erhöhung des Stabes 12 verursacht. Durch passende Wahl der Länge der Biegefedern 14, 15 kann man aber die virtuelle Verschiebung ihrer Spitzen gleich der Erhöhung der Lage des Stabes 12 setzen. Dadurch wird die Waage auf diese unberechenbare Verformung des Gestelles 1 unempfindlich gemacht. In Fig. 8 ist der Fall dargestellt, bei welchem zwei gleiche und gleichgerichtete Momente auf das Gestell 1 wirken. Dadurch erfahren die Enden der Biegefedern 14, 15 gleiche Versetzungen und gleiche Verdrehungen. Der Stab 12 erfährt eine Verschiebung und eine Verdrehung. Durch die passende Wahl der Länge der Biegefedern 14, 15 entsteht auch in diesem Fall keine zusätzliche, störende, fehlererzeugende Belastung. Also auch in diesem Fall bleibt die Waage allfälligen Verbiegungen des Gestelles 1 gegenüber unempfindlich.

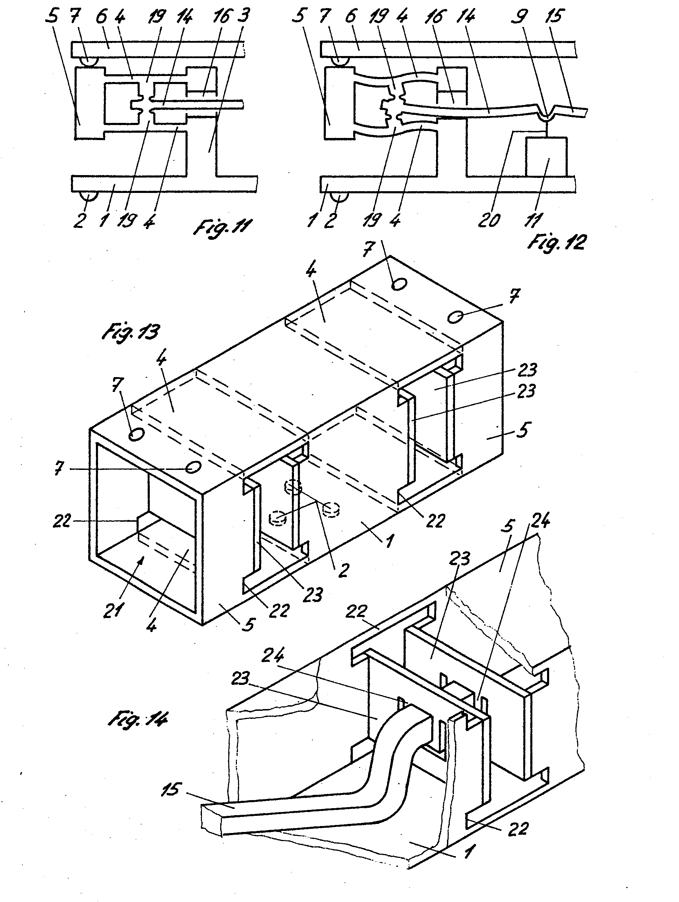

In Fig. 9 und 10 ist ein zweites Ausführungsbeispiel schematisch dargestellt. Die Ausleger 3 weisen eine Bohrung 16 auf, durch welche die Enden des Uebertragungsorganes 8 geführt werden. Diese Enden sind mittels zweier horizontal versetzt angeordneter Bänder 17, 18 einerseits mit dem Ausleger 3 und andererseits mit der Stütze 5 verbunden. Wenn sich unter der Wirkung der Belastung die Blattfedern 4 verbiegen, erfährt das Uebertragungsorgan 8 eine Verformung (Fig. 10). Die dadurch entstehende Zugkraft im Zugdraht 10 bildet die Messkraft, die in der Kraftmesszelle 11 zur Ermittlung der Belastung dient.

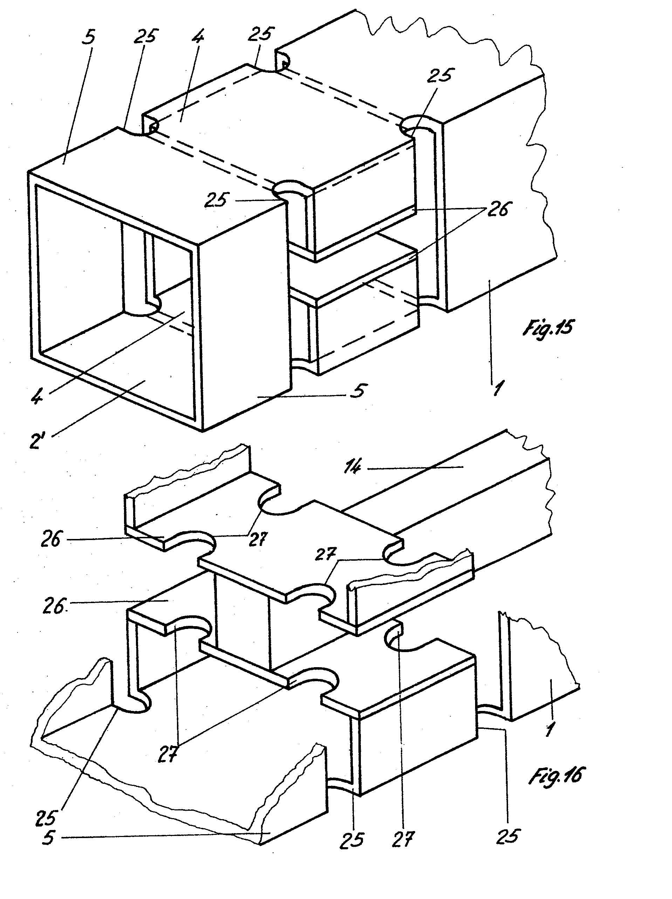

In Fig. 11, 12 ist ein drittes Ausführungsbeispiel dargestellt. Das Ende des Uebertragungsorganes 8 ist mittels zweier, übereinander liegender elastischer Gelenke 19 mit den beiden Blattfedern 4 verbunden. Wenn die Belastung auf die Blattfedern 4 (Fig. 12) einwirkt, so wird das Uebertragungsorgan 8 nach oben verbogen. Der Teil 9 übt eine Druckkraft auf eine kleine, starre, auf den Krafteingang der Kraftmesszelle 11 wirkende Stange 20 aus. Diese Druckkraft dient als Messkraft.

In Fig. 13 und 14 ist ein weiteres Ausführungsbeispiel dargestellt, das wenn auch schematisch, einer praktischen Ausführung des Erfindungsgegenstandes nach Fig. 9 und 10 entspricht. In diesen Fig. 13, 14 ist der Lastträger 6 nicht dargestellt. Die übrigen Teile der Waage bestehen aus einem einzigen Vierkantrohr 21. Alle nachstehend beschriebenen Elemente sind, mit Ausnahme der Füsse 2, spiegelsymmetrisch bezüglich einer mittleren, vertikalen Ebene.

In diesem Vierkantrohr 21 sind vier doppel-T-förmige Oeffnungen 22 herausgefräst worden. Der mittlere Teil des Rohres 21 bildet dann das Gestell 1, die Stützen 5 sind durch die beiden Enden des Rohres 21 gebildet. Gestell 1 und Stützen 5 sind durch vier biegsame Teile verbunden, die die Blattfedern 4 bilden. Entlang der vertikalen Kanten der Oeffnungen 22 sind starre Platten 23 befestigt. Jeder dieser Platten 23 weist eine C-förmige Nut 24 auf. In den dadurch entstehenden Zungen jeder Platte 23 ist das Ende einer Biegefeder 14 bzw. 15 befestigt, deren anderes Ende, wie in Fig. 4-8 beschrieben, über Gelenke 13 (nicht dargestellt) mit einem starren Stab 12 (ebenfalls nicht dargestellt) verbunden ist.

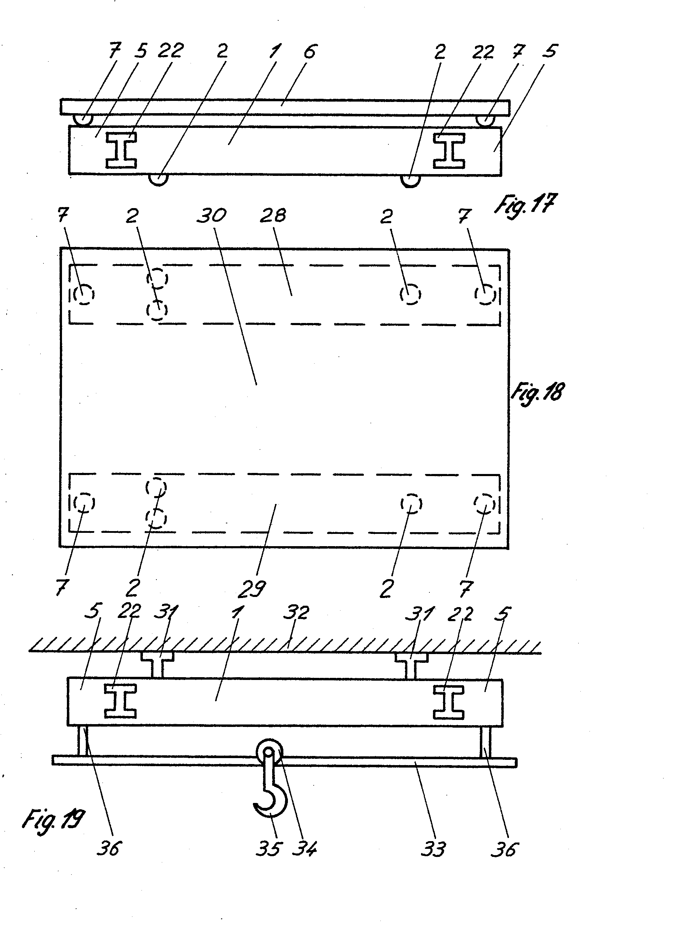

In Fig. 15, 16 ist ein weiteres Ausführungsbeispiel dargestellt, das einer praktischen Ausführung nach Fig. 11 und 12 entpricht. An Stelle von doppel-T-förmigen Oeffnungen nach Fig. 13, 14 weist das Vierkantrohr 21 H-förmige Oeffnungen 25 auf. Entlang ihrer horizontalen Kanten sind Platten 26 befestigt, die zur Bildung elastischer Gelenke je mit vier Aussparungen 27 versehen sind. Zwischen den beiden Platten 26 ist das Ende der Biegefeder 14 bzw. 15 eingespannt.

Fig. 17, 18 zeigen eine Anwendung der Ausführung nach Fig. 13, 14, bei welcher zwei solche Waagen 28, 29 mit einer gemeinsamen Waagplatte 30 eingesetzt werden.

- 7 -

In Fig. 19 ist eine weitere Anwendung der Ausführung nach Fig. 13, 14 als Hängebahnwaage dargestellt. Das Gestell 1 ist mittels zweier Träger 31 an einer Decke 32 befestigt. Die Waagplatte ist als Schiene 33 mit Rolle 34 und Lasthacken 34 ausgebildet und mittels Träger 36 an den die Stützen 5 bildenden Enden des Gestelles der Waage befestigt.

PATENTANSPRUECHE

1. Massen- und Kraftmessgerät mit einem Gestell, einem Lastträger, einem Mess-System, Federn zur Aufnahme des Hauptanteiles der Last und einem elastischen Uebertragungsorgan zur Uebertragung des lastproportionalen Restanteiles der Last auf das Mess-System, dadurch gekennzeichnet, dass sich der Lastträger unmittelbar auf zwei Stützen stützt, die je mittels zweier, eine Parallelführung bildender Blattfedern am Gestell angebracht sind.

2. Massen- und Kraftmessgerät nach Anspruch 1, dadurch gekennzeichnet, dass das Uebertragungsorgan beiderends in je einer dieser Blattfedern eingespannt ist und in seiner Mitte mit dem Mess-System verbunden ist.

3. Massen- und Kraftmessgerät nach Anspruch 2, dadurch gekennzeichnet, dass das Uebertragungsorgan aus zwei durch einen mittleren Teil verbundenen Biegefedern besteht.

4. Massen- und Kraftmessgerät nach Anspruch 3, dadurch gekennzeichnet, dass der mittlere Teil aus einem starren Stab besteht, der mittels elastischer Gelenke an den Biegefedern befestigt ist.

5. Massen- und Kraftmessgerät nach Anspruch 1, dadurch gekennzeichnet, dass das Uebertragungsorgan mittels elastischer Gelenke beiderends mit beiden Blattfedern verbunden ist.

6. Massen- und Kraftmessgerät nach Anspruch 1, dadurch gekennzeichnet, dass das Uebertragungsorgan beiderends mittels Bändern sowohl mit einer der Stützen als auch mit dem Gestell verbunden ist.

7. Massen- und Kraftmessgerät nach Anspruch 1, dadurch gekennzeichnet, dass das Gestell und die Stützen aus einem Vierkantrohr bestehen, das seitlich mit vier doppel-T-förmigen Oeffnungen versehen ist.

0071652

- 2 -

8. Massen- und Kraftmessgerät nach Anspruch 7, dadurch gekennzeichnet, dass entlang der vertikalen Kanten der doppel-I-förmigen Oeffnungen Platten befestigt sind, in welchen die Enden von zwei das Uebertragungsorgan bildenden Biegefedern eingespannt sind.

9. Massen- und Kraftmessgerät nach Anspruch 1, dadurch gekennzeichnet, dass das Gestell und die Stützen aus einem Vierkantrohr bestehen, das seitlich mit H-förmigen Oeffnungen versehen ist.

10. Massen- und Kraftmessgerät nach Anspruch 9, dadurch gekennzeichnet, dass entlang der horizontalen Kanten dieser H-förmigen Oeffnungen Platten befestigt sind, die jede Aussparungen aufweisen und zwischen welchen die Enden von zwei das Uebertragungsorgan bildenden Biegefedern eingespannt sind.

0071652

1/5

Fig.1

Fig.2

Fig.3

Fig. 4

Fig.5

Fig. 6

Fig. 7

Fig. 8

Fig. 9

Fig. 10

Fig. 11

Fig. 12

Fig. 13

Fig. 14

Fig.15

Fig.16

0071652

5/5

Fig. 17

Fig. 18

Fig. 19

**Europäisches Patentamt**

# EUROPÄISCHER RECHERCHENBERICHT

Nummer der Anmeldung

EP 81 10 6049

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| YD | EP - A - 0 016 238 (WIRTH, GALLO & CO)<br><br>* Patentansprüche 1-4, Abbildungen 1-8 * | 1-5 |
| Y | FR - A - 2 112 216 (METTLER INSTRU-MENTE AG.)<br><br>* Patentanspruch 1, Seite 5, Zeilen 34-40; Abbildung 4 * | 1 |
| A | DE - A - 2 710 788 (SARTORIUS WERKE GmbH)<br><br>* Patentanspruch 1, Seite 13, zweiter und dritter Absatz; Abbildungen 2 und 4 * | 1 |
| A | US - A - 3 877 532 (J. HALE)<br><br>* Patentanspruch 1, Abbildung 5 * | 1 |

### KLASSIFIKATION DER ANMELDUNG (Int. Cl.³)

G 01 G 3/08
G 01 L 1/04

### RECHERCHIERTE SACHGEBIETE (Int. Cl.³)

G 01 G
G 01 L

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde lie-gende Theorien oder Grund-sätze
E: älteres Patentdokument, das jedoch erst am oder nach dem Anmeldedatum veröffentlicht worden ist
D: in der Anmeldung angeführtes Dokument
L: aus andern Gründen ange-führtes Dokument

&: Mitglied der gleichen Patent-familie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Den Haag | 07-04-1982 | VITZTHUM |

EPA form 1503.1 06.78